# EUROPEAN PATENT APPLICATION

(11) **EP 3 819 561 A1**
(43) Date of publication of application: **12.05.2021**
(21) Application number: 18908282.9
(22) Date of filing: 22.12.2018
(51) Int. Cl.: F25B 30/02, F25B 30/06, F24D 3/18, F28D 15/04, F28F 9/00

(54) **THIN-SHELL-TYPE HEAT EXCHANGER, AND HEAT PUMP SYSTEM AND METHOD UTILIZING UNDERGROUND WASTE HEAT SOURCE**

(30) Priority: 09.08.2018 CN 201810902021; 17.08.2018 CN 201810941225
(71) Applicant: Qingdao University Of Technology, Qingdao, Shandong 266555 (CN)
(72) Inventor: HU, Songtao, Qingdao Shandong 266555 (CN); JI, Yongming, Qingdao Shandong 266555 (CN); LIU, Guodan, Qingdao Shandong 266555 (CN); TONG, Zhen, Qingdao Shandong 266555 (CN); TONG, Li, Qingdao Shandong 266555 (CN)
(74) Representative: ZHAOffice SPRL
(86) International application number: PCT/CN2018/122944
(87) International publication number: WO 2020/029516

(57) **Abstract**

The present invention discloses a thin-shell heat exchanger, a subway waste heat source heat pump system, an installation and construction method of the thin-shell heat exchanger, and an operating method of the system. The system comprises the thin-shell heat exchanger, a compressor, a condenser, an evaporator, a terminal heat exchanger and an auxiliary cold source, wherein the high temperature liquid was delivered to the evaporator through a circulation loop between the thin-shell heat exchanger in the surrounding rock of subway tunnel and a heat pump unit, the evaporator delivers the high temperature liquid to the condenser through the compressor, low temperature return water at the terminal heat exchanger is delivered to the condenser through a circulation loop between a winter load side terminal heat exchanger and the heat pump unit, and high temperature water flows into the terminal heat exchanger from the condenser to supply heat to ground buildings; cooling water in the condenser exchanges heat with high temperature and high pressure refrigerant gas, and then is delivered to the auxiliary cold source through a circulation loop between a summer auxiliary cold source and the heat pump unit for cooling, the cooling water in the condenser is delivered to the evaporator through a throttling valve, and chilled water in the evaporator is cooled and then delivered to the terminal heat exchanger through a circulation loop between a summer load side terminal heat exchanger and the heat pump unit to supply cold to the ground buildings.

## Description

### Field of the Invention

The present invention relates to a composite heat pump system, in particular to a thin-shell heat exchanger for a subway tunnel, a subway waste heat source heat pump system using the thin-shell heat exchanger as a front end, an installation and construction method of the thin-shell heat exchanger, and an operating method of the subway waste heat source heat pump system.

### Background of the Invention

At present, subways have become an option for more and more large cities to alleviate traffic pressure. After running of a subway, the heat transfer in the subway tunnel is a long-term slow and unsteady process. The heat accumulation in the tunnel is inevitable. The longer time the subway runs, the more the heat is accumulated, resulting in a temperature rise of air and surrounding rock in the tunnel. To solve this problem, the subway tunnels are mostly directly cooled by cooling towers on the ground in Guangzhou, Shanghai in China and other places with subways constructed early. However, most of the subway sections are in the downtown where little space is provided for installing the cooling towers, and the subway air-conditioning cooling towers are likely to be contaminated by legionella and propagate the bacteria to nearby people due to dense crowds and too many particulate matters.

With uninterrupted operation of the subway, a large amount of waste heat is continuously stored in the rock surrounding the tunnel. Compared with the cooling and heating load of a ground building, the cooling and heating load in the subway station is small. Thus, the heat pump technology can be used to take and release heat for the surrounding rock of the tunnel through a reasonable front-end heat exchanger, and cooperates with auxiliary cooling equipment to supply cold in the air-conditioning season and heat in the heating season for ground buildings, thereby supplying energy for ground buildings while the heat contamination problem of underground space of the subway is solved. This technology achieves heat balance in the energy cycle of the subway, greatly improves the utilization rate of energy, and really realizes sustainable operation of the subway.

Underground tunnels and subway stations are basically below the underground constant temperature layer, and the temperature of the underground rock is stable all year round, so the underground rock is very suitable as a cold and heat source for the heat pump system. The buried pipe heat exchanger in the conventional soil source heat pump system covers a large area, the thermal conductivity of soil is small, and the heat exchange amount of a single buried pipe is limited, so when the heat supply is large, the problems of excessive length of buried pipes, high drilling cost, high construction difficulty and the like are caused, and the troubleshooting of buried pipes is also difficult.

At present, there are still many problems in the soil source heat pump system of the buried pipe heat exchanger, such as large site area, large number of holes, difficult construction and high cost, and there has been still no effective solution.

### Summary of the Invention

In order to overcome the above deficiencies of the prior art, the present invention provides a thin-shell heat exchanger for a subway tunnel, a subway waste heat source heat pump system using the thin-shell heat exchanger as a front end, an installation and construction method of the thin-shell heat exchanger, and an operating method of the subway waste heat source heat pump system, which can effectively improve the quality of subway environment, reduce waste heat emission of the subway to the environment, have the advantages of high heat exchange efficiency, environmental protection, economical efficiency, practicality, long service life, etc., and can fully use the waste heat generated by subway operation for heating in the heating season and cooling in the air-conditioning season for ground buildings. Subway tunnels and surrounding rock or auxiliary cooling equipment thereof are freely selected as a cold source in the air-conditioning season for ground buildings, so that the advantages of the subway waste heat source heat pump system are fully exerted.

The technical solution adopted by the present invention is:
A first objective of the present invention is to provide a thin-shell heat exchanger, including a first tunnel lining, a thin-shell heat exchanger body and a second tunnel lining sequentially arranged in a tunnel surrounding rock from inside to outside, wherein a protective layer composed of mortar, a geo-textile and a waterproof board is sandwiched between the thin-shell heat exchanger body and the second tunnel lining, and the thin-shell heat exchanger body exchanges heat with the subway tunnel surrounding rock.

Further, the thin-shell heat exchanger body includes a water inlet main pipe, a water return main pipe, and a capillary mesh connected between the water inlet main pipe and the water return main pipe, the capillary mesh being laid along the circumference of the arc wall surface of a tunnel; the capillary mesh includes a plurality of capillary heat-conducting water pipes uniformly distributed between the water inlet main pipe and the water return main pipe and penetrating the water inlet main pipe and the water return main pipe, and the water inlet main pipe and the water return main pipe are arranged in a reserved main pipe trench on the same side of the tunnel.

A second objective of the present invention is to provide an installation and construction method of the thin-shell heat exchanger, including the following steps:
(1) determining a laying position of the capillary mesh, checking whether the wall surface of the tunnel is flat, and forming a trench at the corresponding position;
(2) performing a leak test on the capillary mesh; and
(3) after the test succeeds, constructing the first tunnel lining, the thin-shell heat exchanger and the second tunnel lining.

Further, the laying position of the capillary mesh is corrected with a level gauge, a theodolite or a balance level; if the wall surface of the tunnel is uneven, the base surface is leveled with cement mortar.

Further, the construction method of the first tunnel lining, the thin-shell heat exchanger and the second tunnel lining includes:
(1) constructing the first tunnel lining;
(2) laying and installing the thin-shell heat exchanger;
(3) sequentially arranging a mortar layer, a geo-textile and a waterproof board outside the thin-shell heat exchanger; and
(4) constructing the second tunnel lining.

Further, the laying and installation method of the thin-shell heat exchanger includes:
sequentially installing and connecting the water inlet main pipe, the water return main pipe, and the capillary mesh;
performing a hydrostatic test on the capillary mesh section by section, and then plastering the capillary mesh and a header; and
marking the mortar layer, performing a hydrostatic test and flushing.

A third objective of the present invention is to provide a subway waste heat source heat pump system, including the thin-shell heat exchanger, a waste heat source heat pump system, a terminal heat exchanger and an auxiliary cold source, wherein the waste heat source heat pump system includes a compressor, a condenser, a throttling valve and an evaporator connected in series, the thin-shell heat exchanger delivers high temperature liquid to the evaporator through a circulation loop between a winter subway waste heat source side heat exchanger and a heat pump unit, the evaporator delivers the high temperature liquid to the condenser through the compressor, low temperature return water from the terminal heat exchanger is delivered to the condenser through a circulation loop between a winter load side terminal heat exchanger and the heat pump unit and heated to be high temperature water after heat exchange in the condenser, and the high temperature water flows into the terminal heat exchanger from the condenser to supply heat to ground buildings; cooling water in the condenser exchanges heat with high temperature and high pressure refrigerant gas, then is delivered to the auxiliary cold source through a circulation loop between a summer auxiliary cold source side and the heat pump unit for cooling and returned to the condenser, the cooling water in the condenser is delivered to the evaporator through the throttling valve, low temperature and low pressure refrigerant liquid in the evaporator exchanges heat with chilled water, and the chilled water cooled is delivered to the terminal heat exchanger through a circulation loop between a summer load side terminal heat exchanger and the heat pump unit to supply cold to the ground buildings.

Further, an outlet of the compressor is connected to a first connector of the condenser, a third connector of the condenser is connected to the throttling valve, the other end of the throttling valve is connected to a fourth connector of the evaporator, and a second connector of the evaporator is connected to an inlet of the compressor, thus constituting a circulation loop of the waste heat source heat pump unit.

Further, the circulation loop between the winter subway waste heat source side heat exchanger and the heat pump unit includes a fifth valve, a first tee joint, a second tee joint, a first circulating water pump, an eighth valve, a third tee joint, and a fourth tee joint, wherein a first connector of the evaporator is connected to a first pipe orifice of the thin-shell heat exchanger via the fifth valve, the first tee joint, the second tee joint and the first circulating water pump, and a third connector of the evaporator is connected to a second pipe orifice of the thin-shell heat exchanger via the eighth valve, the third tee joint and the fourth tee joint.

Further, the circulation loop between the winter load side terminal heat exchanger and the heat pump unit includes a sixth tee joint, a ninth tee joint, a fourth valve, a seventh tee joint, an eighth tee joint, a tenth tee joint, a seventh valve and a second circulating water pump, wherein a second connector of the condenser is connected to a water inlet end of the terminal heat exchanger via the sixth tee joint, the ninth tee joint and the fourth valve, and a fourth connector of the condenser is connected to a water return end of the terminal heat exchanger via the seventh tee joint, the eighth tee joint, the tenth tee joint, the seventh valve and the second circulating water pump.

Further, the circulation loop between the summer auxiliary cold source side and the heat pump unit includes the sixth tee joint, a fifth tee joint, a second valve, a fourth circulating water pump, the seventh tee joint, the eighth tee joint and a sixth valve, wherein the second connector of the condenser is connected to a water inlet end of the auxiliary cold source via the sixth tee joint, the fifth tee joint, the second valve and the fourth circulating water pump, and the fourth connector of the condenser is connected to a water return end of the auxiliary cold source via the seventh tee joint, the eighth tee joint and the sixth valve.

Further, the circulation loop between the summer load side terminal heat exchanger and the heat pump unit includes a third valve, the second tee joint, the ninth tee joint, a ninth valve, the fourth tee joint, the tenth tee joint and a third circulating water pump, wherein the first connector of the evaporator is connected to the water return end of the terminal heat exchanger via the third valve, the second tee joint and the ninth tee joint, and the third connector of the evaporator is connected to the water inlet end of the terminal heat exchanger via the ninth valve, the fourth tee joint, the tenth tee joint and the third circulating water pump.

Further, the system further includes a circulation loop between a summer subway tunnel and rock cold source side and the heat pump unit, circulating liquid in the thin-shell heat exchanger is delivered to the condenser through the circulation loop between the summer subway tunnel and rock cold source side and the heat pump unit, and exchanges heat with the high temperature and high pressure refrigerant gas in the condenser, the temperature of the circulating liquid rises, then the circulating liquid flows out from the condenser and is returned to the thin-shell heat exchanger to emit heat to the rock surrounding the subway tunnel for storage or directly emit heat to the tunnel and the heat is taken away by piston wind.

Further, the circulation loop between the summer subway tunnel and rock cold source side and the heat pump unit includes the sixth tee joint, the fifth tee joint, the third tee joint, a first valve, the seventh tee joint, the first tee joint, the tenth valve and the first circulating water pump, wherein the second connector of the condenser is connected to the second pipe orifice of the thin-shell heat exchanger via the sixth tee joint, the fifth tee joint, the third tee joint and the first valve, and the fourth connector of the condenser is connected to the first pipe orifice of the thin-shell heat exchanger via the seventh tee joint, the first tee joint, the tenth valve and the first circulating water pump.

A fourth objective of the present invention is to provide an operating method of the subway waste heat source heat pump system with an auxiliary cold source, the method including the following steps:
high temperature and high pressure refrigerant gas discharged from the compressor enters the condenser and then is condensed into low temperature and high pressure liquid, the low temperature and high pressure refrigerant liquid becomes low temperature and low pressure refrigerant liquid through the throttling valve, the low temperature and low pressure refrigerant liquid flows into the evaporator to become low temperature and low pressure refrigerant gas after the evaporator absorbs heat, and the refrigerant gas flows back to the compressor;
when heat is supplied in winter, the fourth, fifth, seventh and eighth valves are opened, the first, second, third, sixth, ninth and tenth valves are closed, the first and second circulating water pumps are started, and the third and fourth circulating water pumps are shut off; high temperature liquid in the thin-shell heat exchanger is pumped into the evaporator by the first circulating water pump via the first pipe orifice, and exchanges heat with the low temperature and low pressure refrigerant liquid in the evaporator, and then the low temperature liquid flows back from the third connector of the evaporator to the thin-shell heat exchanger to recover waste heat; at the same time, low temperature liquid at the terminal heat exchanger is pumped into the condenser by the second circulating water pump, and exchanges heat with the high temperature and high pressure refrigerant gas in the condenser to become high temperature water, the high temperature water flows out from the second connector of the condenser and then enters the terminal heat exchanger to supply heat to the ground building, and the low temperature water is pumped into the condenser by the second circulating water pump, which process is circulated in sequence to achieve heat supply;
when cold is supplied in summer, the fourth, fifth, seventh and eighth valves are closed, the third and ninth valves are opened, the second circulating water pump is shut off, and the third circulating water pump is started; the cooling tower is used as a cold source, the second and sixth valves are opened and the fourth circulating water pump is started, the first and tenth valves are closed and the first circulating water pump is shut off; cooling water in the condenser exchanges heat with the high temperature and high pressure refrigerant gas, the temperature of the cooling water rises, then the cooling water is pumped into the cooling tower by the fourth circulating water pump via the second connector of the condenser for cooling, the cooled water is returned to the condenser, the cooling water in the condenser is delivered to the evaporator via the throttling valve, the low temperature and low pressure refrigerant liquid in the evaporator exchanges heat with returned chilled water, the chilled water is cooled and then pumped into the terminal heat exchanger from the third connector of the evaporator by the third circulating water pump to supply cold to users in ground buildings, then the temperature of the chilled water rises, and the chilled water flows back to the evaporator, which process is circulated in sequence to achieve cold supply.

Compared with the prior art, the present invention has the following advantages:
(1) The thin-shell heat exchanger is arranged between a first tunnel lining and a second tunnel lining, and the thin-shell heat exchanger and the tunnel second lining are protected by mortar, a geo-textile and a waterproof board, so that the thin-shell heat exchanger can exchange heat directly with the surrounding rock of a subway tunnel, release heat to the surrounding rock of the tunnel in summer and take heat from the surrounding rock of the tunnel in winter to ensure heat balance of the surrounding rock of the subway tunnel, effectively improve the quality of subway environment and reduce the waste heat emission of the subway to the environment, and has the advantages of high heat exchange efficiency, environmental protection, economical efficiency, applicability, long service life and the like;
(2) The waste heat generated by subway operation is fully utilized, the combination of a subway waste heat source heat pump system and an auxiliary cold source realizes simultaneous cold and heat supply for ground building users, and the heat absorption and release of the subway tunnel and surrounding rock thereof are also balanced; the summer cold source scheme can be freely selected by switching valves, so that the subway waste heat source heat pump system inherits the advantages of a soil source heat pump system, and solves the problems about cold supply for ground building users in summer; the whole system is more energy-saving and environment-friendly;
(3) The waste heat generated by subway operation can be fully utilized to supply heat for ground buildings, and the subway tunnel and surrounding rock or the auxiliary cold source thereof can be freely selected as a cold source to supply cold for ground buildings in summer, so that the advantages of the subway waste heat source heat pump system are fully exerted.

### Brief Description of the Drawings

The accompanying drawings constituting a part of the present application are used for providing a further understanding of the present application, and the illustrative embodiments of the present application and the description thereof are used for interpreting the present application, rather than constituting improper limitations to the present application.
FIG. 1 is a structure diagram of a subway waste heat source heat pump system with a thin-shell heat exchanger;
FIG. 2 is a structure diagram of a capillary mesh;

In which: 1, thin-shell heat exchanger; 2, compressor; 3, condenser; 4, throttling valve; 5, evaporator; 6, user end; 7, auxiliary cooling equipment; 8, capillary heat-conducting water pipe; 9, water inlet main pipe; 10, water return main pipe; 11, first tunnel lining; 12, thin-shell heat exchanger body; 13, mortar; 14, geo-textile; 15, waterproof board; 16, second tunnel lining; 17, reserved main pipe trench; a, first condenser connector; b, second condenser connector; c, third condenser connector; d, fourth condenser connector; e, first evaporator connector; f, second evaporator connector; g, third evaporator connector; h, fourth evaporator connector; i, first thin-shell heat exchanger main pipe orifice; j, second thin-shell heat exchanger main pipe orifice; k, first tee joint; 1, second tee joint; m, third tee joint; n, fourth tee joint; o, fifth tee joint; p, sixth tee joint; q, seventh tee joint; r, eighth tee joint; s, ninth tee joint; t, tenth tee joint; A, first circulating water pump; B, second circulating water pump; C, third circulating water pump; D, fourth circulating water pump; E, first valve; F, second valve; G, third valve; H, fourth valve; I, fifth valve; J, sixth valve; K, seventh valve; L, eighth valve; M, ninth valve; N, tenth valve.

### Detailed Description of Embodiments

The present invention will be further illustrated below in conjunction with the accompanying drawings and embodiments.

It should be pointed out that the following detailed descriptions are all exemplary and aim to further illustrate the present application. Unless otherwise specified, all technological and scientific terms used in the descriptions have the same meanings generally understood by those of ordinary skill in the art of the present application.

It should be noted that the terms used herein are merely for describing specific embodiments, but are not intended to limit exemplary embodiments according to the present application. As used herein, unless otherwise explicitly pointed out by the context, the singular form is also intended to include the plural form. In addition, it should also be appreciated that when the terms "include" and/or "comprise" are used in the description, they indicate features, steps, operations, devices, components and/or their combination.

The present embodiment provides a thin-shell heat exchanger in order to solve the problems that the buried pipe heat exchanger of the conventional ground source heat pump system occupies a large area; the thermal conductivity of soil is small and the heat exchange amount of a single buried pipe is limited, so that when the heat supply is constant, long buried pipes are required, which results in more boreholes in the buried pipes and large heat exchange field; and the buried pipes are drilled underground during installation, so that the construction is difficult, the drilling cost is high, and the buried pipes in fault are also difficult to overhaul and replace.

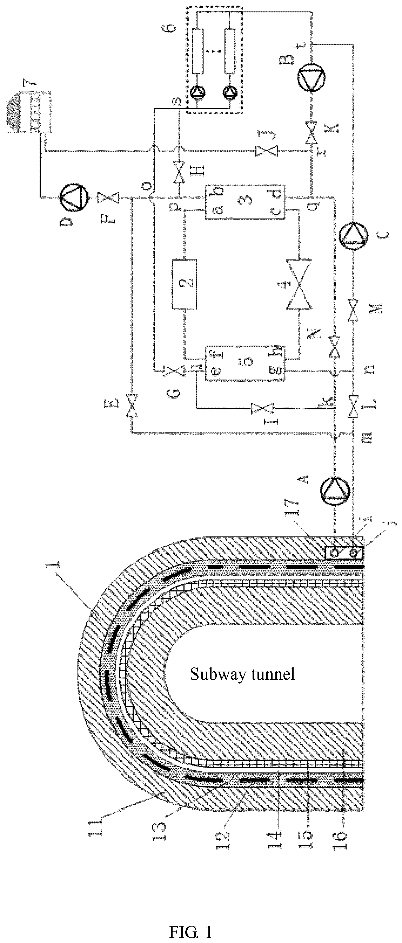

As shown in FIG. 1, the thin-shell heat exchanger includes a first tunnel lining 11, a thin-shell heat exchanger body 12, and a second tunnel lining 16 sequentially arranged in surrounding rock of a tunnel from inside to outside.

Specifically, the thin-shell heat exchanger body 12 is arranged between the first tunnel lining 11 and the second tunnel lining 16 of the surrounding rock of the subway tunnel as a front-end heat exchange device of a subway waste heat source heat pump, and the thin-shell heat exchanger body 12 exchanges heat with the surrounding rock of the subway tunnel to release heat to the surrounding rock of the tunnel in summer and take heat from the surrounding rock of the tunnel in winter so as to ensure the heat balance of the surrounding rock of subway tunnel.

A protective layer composed of mortar 13, a geo-textile 14 and a waterproof board 15 is sandwiched between the thin-shell heat exchanger body 12 and the second tunnel lining 16.

The thin-shell heat exchanger body is laid along the circumference of the arc wall surface of the tunnel, and the thin-shell heat exchanger body 12 includes a water inlet main pipe 9, a water return main pipe 10, a capillary mesh connected between the water inlet main pipe 9 and the water return main pipe 10, connectors, system pipes and pipe fittings, etc.

Further, the water inlet main pipe 9, the water return main pipe 10, connectors, system pipes and pipe fittings, etc. are made of plastic, stainless steel or copper. The materials should be determined by comprehensive comparison according to the working temperature, working pressure, design life, on-site waterproofing, water quality requirements, and construction requirements.

The color of the capillary mesh should be uniform, and the inner and outer surfaces of the pipes and the pipe fittings should be smooth, flat, clean, and free from depressions, bubbles, obvious scratches and other surface defects that affect performance.

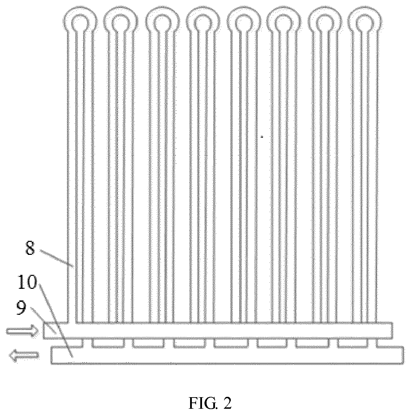

Specifically, the capillary mesh includes a plurality of capillary heat-conducting water pipes 8 uniformly distributed between the water inlet main pipe 10 and the water return main pipe 11 and penetrating the water inlet main pipe and the water return main pipe, as shown in FIG. 2. The water inlet main pipe 10 and the water return main pipe 11 are arranged in a reserved main pipe trench 17 on the same side of the tunnel.

The capillary heat-conducting water pipes 8 are PPR pipes having a diameter of 4.3 mm and a wall thickness of 0.85 mm, the spacing between the adjacent capillary heat-conducting water pipes is 10 mm, the width of each piece of capillary mesh is 1 m, and the length of the capillary heat-conducting water pipes in the capillary mesh can be customized according to actual needs.

The PPR pipe shall be formed at one time, and no joint shall be presented in the middle. The end face of the pipe shall be cut flat and perpendicular to the axis. The PPR pipe mesh shall be tested in factory for water pressure, and the factory test pressure shall be not less than 0.3 MPa for 5-10 minutes.

The reserved main pipe trench 17 and a thin-shell heat exchanger main pipe are arranged on one side of the tunnel, where the reserved main pipe trench 7 is used for placing the water inlet main pipe and the water return main pipe; and the thin-shell heat exchanger main pipe is a general name of the water inlet main pipe and the water return main pipe, is used for supplying water and returning water to the capillary heat-conducting water pipes, and is equivalent to a trunk pipe, while the capillary heat-conducting water pipes are branch pipes.

In the thin-shell heat exchanger for a subway tunnel according to Embodiment 1 of the present invention, the thin-shell heat exchanger is arranged between a first tunnel lining and a second tunnel lining, and the thin-shell heat exchanger and the tunnel second lining are protected by mortar, a geo-textile and a waterproof board, so that the thin-shell heat exchanger can exchange heat directly with the surrounding rock of a subway tunnel, release heat to the surrounding rock of the tunnel in summer and take heat from the surrounding rock of the tunnel in winter to ensure heat balance of the surrounding rock of the subway tunnel, effectively improve the quality of subway environment and reduce the waste heat emission of the subway to the environment, and has the advantages of high heat exchange efficiency, environmental protection, economical efficiency, applicability, long service life and the like.

The present embodiment also provides an installation and construction method of the thin-shell heat exchanger. The method includes the following steps:
S101, a laying position of the capillary mesh is determined, whether the wall surface of the tunnel is flat is checked, and a trench is formed at the corresponding position, as shown by reference sign 17 in FIG. 1. The trench is the main pipe trench.

After the construction preparation is completed, the laying position of the capillary mesh is paid-off with a level gauge, a theodolite or a balance level to correct the laying position of the capillary mesh.

If the wall surface of the tunnel is uneven, the uneven portion of the tunnel wall is leveled with cement mortar, where the ratio of sand to cement is 1: 3.

S102, a leak test is performed on the capillary mesh.

After the capillary mesh material is delivered to the construction site, a hydrostatic test method is applied to the leak test on the capillary mesh sample to eliminate the leaking capillary mesh.

S103, after the test succeeds, the first tunnel lining, the thin-shell heat exchanger and the second tunnel lining are constructed.

The construction method of the first tunnel lining, the thin-shell heat exchanger and the second tunnel lining includes:
S1031, the first tunnel lining is constructed.
S1032, the thin-shell heat exchanger is laid and installed.

After the construction of the first tunnel lining is completed, the thin-shell heat exchanger 12 is laid and installed. The laying and installation method of the thin-shell heat exchanger includes:
installing and connecting the water inlet main pipe, the water return main pipe, and the capillary mesh successively;
performing a hydrostatic test on the capillary mesh section by section, and then plastering the capillary mesh and a header; and
marking the mortar layer, performing a hydrostatic test and flushing.

51033, a mortar layer, a geo-textile and a waterproof board are sequentially arranged outside the thin-shell heat exchanger.

After laying of the thin-shell heat exchanger, the protective layer composed of a mortar protective layer, a geo-textile and a waterproof board is added to the outside of the thin-shell heat exchanger.

S1034, the second tunnel lining is finally constructed;
The construction method further includes: before the laying and installation of the thin-shell heat exchanger, the reserved main pipe trench and the thin-shell heat exchanger main pipe are arranged on one side of the tunnel.

In the installation and construction method of the thin-shell heat exchanger according to the present embodiment, the thin-shell heat exchanger is arranged between a first tunnel lining and a second tunnel lining, and the thin-shell heat exchanger and the tunnel second lining are protected by mortar, a geo-textile and a waterproof board, so that the thin-shell heat exchanger can exchange heat directly with the surrounding rock of a subway tunnel, release heat to the surrounding rock of the tunnel in summer and take heat from the surrounding rock of the tunnel in winter to ensure the heat balance of the surrounding rock of the subway tunnel, effectively improve the quality of subway environment and reduce the waste heat emission of the subway to the environment, and has the advantages of high heat exchange efficiency, environmental protection, economical efficiency, applicability, long service life and the like.

The cooling load in the station during the operation of the subway only accounts for a relatively small part, and is much smaller than the summer cooling load supplied to ground building users by the cold heat source of the subway tunnel, and the prior art does not solve the problem of cold supply to ground building users in summer. In order to solve the technical problem, the present embodiment also provides a subway waste heat source heat pump system including the thin-shell heat exchanger and an operating method thereof. The system cooperates with an auxiliary cold source to achieve the effects of supplying heat in winter and supplying cold in summer to ground building users, and fully using the waste heat generated by subway operation.

As shown in FIG. 1, the subway waste heat source heat pump system includes a capillary network front-end heat exchange system, a waste heat source heat pump system, a terminal heat exchanger 6, and an auxiliary cold source 7; the capillary network front-end heat exchange system includes the thin-shell heat exchanger 1 and a first circulating water pump A; the waste heat source heat pump system includes a compressor 2, a condenser 3 with a first connector *a*, a second connector *b,* a third connector *c* and a fourth connector *d,* a throttling valve 4, and an evaporator 5 with a first connector *e*, a second connector *f*, a third connector *g* and a fourth connector *h;* the entire system is connected to a valve by pipes, and the terminal heat exchanger 6 is in a ground building.

The specific connection relation of the system is: an outlet of the compressor 2 is connected to the first connector a of the condenser 3, the third connector c of the condenser 3 is connected to the throttling valve 4, the other end of the throttling valve 4 is connected to the fourth connector *h* of the evaporator 5, and the second connector *f* of the evaporator 5 is connected to an inlet of the compressor 2, thus constituting a waste heat source heat pump unit circulation loop; the first connector *e* of the evaporator 5 is connected to a first pipe orifice *i* of the thin-shell heat exchanger 1 via a fifth valve I, a first tee joint *k*, a second tee joint 1 and the first circulating water pump A, and the third connector g of the evaporator 5 is connected to a second pipe orifice *j* of the thin-shell heat exchanger 1 via an eighth valve L, a third tee joint m and a fourth tee joint *n*, thus constituting a circulation loop between a winter subway waste heat source side heat exchanger and a heat pump unit; the first connector e of the evaporator 5 is connected to a water return end of the terminal heat exchanger 6 via a third valve G, the second tee joint 1 and a ninth tee joint s, and the third connector *g* of the evaporator 5 is connected to a water inlet end of the terminal heat exchanger 6 via a ninth valve M, the fourth tee joint *n,* a tenth tee joint *t* and a third circulating water pump C, thus constituting a circulation loop between a summer load side terminal heat exchanger and the heat pump unit; the second connector *b* of the condenser 3 is connected to the water inlet end of the terminal heat exchanger 6 via a sixth tee joint *p*, the ninth tee joint s and a fourth valve H, and the fourth connector *d* of the condenser 3 is connected to the water return end of the terminal heat exchanger 6 via a seventh tee joint *q,* an eighth tee joint *r*, the tenth tee joint *t,* a seventh valve K and a second circulating water pump B, thus constituting a circulation loop between a winter load side terminal heat exchanger and the heat pump unit; the second connector b of the condenser 3 is connected to the second pipe orifice *j* of the thin-shell heat exchanger 1 via the sixth tee joint *p,* a fifth tee joint *o*, the third tee joint *m* and a first valve E, and the fourth connector *d* of the condenser 3 is connected to the first pipe orifice *i* of the thin-shell heat exchanger 1 via the seventh tee joint *q,* the first tee joint *k*, a tenth valve N and the first circulating water pump A, thus constituting a circulation loop between a summer subway tunnel and rock cold source side and the heat pump unit; the second connector *b* of the condenser 3 is connected to a water inlet end of an auxiliary cold source 7 via the sixth tee joint *p*, the fifth tee joint *o*, a second valve F and a fourth circulating water pump D, and the fourth connector *d* of the condenser 3 is connected to a water return end of the auxiliary cold source 7 via the seventh tee joint *q*, an eighth tee joint *r* and a sixth valve J, thus constituting a circulation loop between a summer auxiliary cold source side and the heat pump unit.

The subway waste heat source heat pump system disclosed in the embodiment of the present invention supplies heat and cold to users in ground buildings in winter and summer. In winter, the waste heat generated in the subway tunnel is supplied to users in ground buildings as a heat source; in summer, the first valve E, the tenth valve F and the sixth valve J may be switched to use the subway tunnel and surrounding rock or the auxiliary cold source thereof as a single cold source for supplying cold to users in ground buildings, or the two cold sources are used at the same time. Because the subway operation inevitably leads to the accumulation of heat in the subway tunnel and surrounding rock thereof, the auxiliary cold source is preferentially used for supplying cold in summer in order to maintain the heat balance.

The terminal heat exchanger 6 may be a capillary network radiation system, but is not limited thereto, and may be other terminal heat exchangers; the auxiliary cold source 7 may be a cooling tower, and the cooling tower should be arranged on the leeward side away from the crowd to reduce infection of legionella, but the auxiliary cold source 7 is not limited to the cooling tower, and may also be in other forms.

The subway waste heat source heat pump system disclosed by the embodiment of the present invention fully utilizes the waste heat generated by subway operation, the combination of the subway waste heat source heat pump system and the auxiliary cold source realizes simultaneous cold and heat supply for ground building users, and the heat absorption and release of the subway tunnel and surrounding rock thereof are also balanced. The summer cold source scheme can be freely selected by switching valves, and the whole system is more energy-saving and environment-friendly, so that the subway waste heat source heat pump system inherits the advantages of a soil source heat pump system and avoids the disadvantages thereof.

For the whole subway waste heat source heat pump system with an auxiliary cold source, the refrigerant circulation of the waste heat source heat pump is indispensable regardless of heating and cooling, and the principle is the same: the high temperature and high pressure refrigerant gas discharged from the compressor 2 enters the first connector *a* of the condenser 3 and then is condensed into low temperature and high pressure liquid, the low temperature and high pressure liquid flows out from the third connector c and then flows into the throttling valve 4 to become low temperature and low pressure refrigerant liquid, the low temperature and low pressure refrigerant liquid flows into the evaporator 5 from the fourth connector *h* of the evaporator 5 to become low temperature and low pressure refrigerant gas after the evaporator 5 absorbs heat, and the refrigerant gas finally flows out from the second connector *f* of the evaporator 5 and flows back to the compressor 2 to complete a cycle.

For the circulation on the source side and the load side, the working principle of heating and cooling is different. The operating process of the subway waste heat source heat pump system with an auxiliary cold source according to the embodiment of the present invention is:
When heat is supplied in winter, the valves H, I, K and L are opened, the valves E, F, G, J, M and N are closed, the circulating water pumps A and B are started, and the circulating water pumps C and D are shut off. The high temperature liquid generated by absorbing waste heat of the subway in the thin-shell heat exchanger 1 is pumped into the evaporator 5 by the circulating water pump A via a connector *i*, and exchanges heat with the low temperature and low pressure refrigerant liquid in the evaporator 5, and then the low temperature liquid on the source side flows back from the connector g of the evaporator 5 to the thin-shell heat exchanger 1 to recover the waste heat; at the same time, the low temperature liquid in the heat supply water circulation on the load side is pumped into the condenser 3 by the circulating water pump B, and exchanges heat with the high temperature and high pressure refrigerant gas in the condenser 3, the liquid for heat supply is heated to high temperature water, the high temperature water flows out from the connector *b* of the condenser 3 and then enters the capillary network radiation system 6 to supply heat to the ground building, and the low temperature water flows back to the circulating water pump B to complete a cycle.

When cold is supplied in summer, no matter in what scheme, the valves H, I, K and L are closed first, then the valves G and M are opened, the circulating water pump B is started, and the circulating water pump C is shut off. Then, the cold source is judged. If the cooling tower 7 is used as a cold source alone, the valves F, J are opened and the circulating water pump D is started, and the valves E, N are closed and the circulating water pump A is shut off; if the subway tunnel and surrounding rock thereof are used as a cold source alone, the valves E, N are opened and the circulating water pump A is started, and the valves F, J are closed and the circulating water pump D is started; if the two cold sources are used at the same time, the valves F, J, E, N and the circulating water pumps A, D are opened.

The circulation between the summer auxiliary cold source side and the heat pump unit is a cooling water circulation for the embodiment of the present invention, the cooling water in the condenser 3 exchanges heat with the high temperature and high pressure refrigerant gas, the temperature of the cooling water rises and then the cooling water is pumped into the cooling tower 7 by the circulating water pump D via the connector *b* of the condenser 3 for cooling, and the cooled water is returned to the condenser 3 to complete a cycle; for the circulation between the summer subway tunnel and rock cold source side and the heat pump unit, the liquid in the thin-shell heat exchanger 1 is pumped into the condenser 3 by the circulating water pump A via the connector d and exchanges heat with the high temperature and high pressure refrigerant gas, the temperature of the circulating liquid rises, then the circulating liquid flows out from the connector *b* of the condenser 3 and is returned to the thin-shell heat exchanger 1 to emit heat to the rock surrounding the subway tunnel for storage or directly emit heat to the tunnel and the heat is taken away by piston wind to complete a cycle; at the same time, the circulation between the summer load side terminal heat exchanger and the heat pump unit is a chilled water circulation for the present embodiment, the low temperature and low pressure refrigerant liquid in the evaporator 5 exchanges heat with chilled water, the chilled water is cooled and then pumped into the capillary network radiation system 6 from the connector *g* of the evaporator 5 by the third circulating water pump to supply cold to users in ground buildings, the temperature of the chilled water rises, and the chilled water flows back to the evaporator 5 from the connector *e* to complete a cycle.

Although the specific embodiments of the present invention are described above in combination with the accompanying drawings, the scope of the present invention is not limited thereto. It should be understood by those skilled in the art that various modifications or variations could be made by those skilled in the art based on the technical solution of the present invention without any creative effort, and these modifications or variations shall fall into the scope of the present invention.

## Claims

1. A thin-shell heat exchanger, comprising a first tunnel lining, a thin-shell heat exchanger body and a second tunnel lining sequentially arranged in a tunnel surrounding rock from inside to outside, wherein a protective layer composed of mortar, a geo-textile and a waterproof board is sandwiched between the thin-shell heat exchanger body and the second tunnel lining, and the thin-shell heat exchanger body exchanges heat with the subway tunnel surrounding rock.

2. The thin-shell heat exchanger according to claim 1, wherein the thin-shell heat exchanger body comprises a water inlet main pipe, a water return main pipe, and a capillary mesh connected between the water inlet main pipe and the water return main pipe, the capillary mesh being laid along the circumference of the arc wall surface of a tunnel.

3. The thin-shell heat exchanger according to claim 2, wherein the capillary mesh comprises a plurality of capillary heat-conducting water pipes uniformly distributed between the water inlet main pipe and the water return main pipe and penetrating the water inlet main pipe and the water return main pipe, and the water inlet main pipe and the water return main pipe are arranged in a reserved main pipe trench on the same side of the tunnel.

4. The thin-shell heat exchanger according to claim 1, wherein the capillary heat-conducting water pipes are PPR pipes having a diameter of 4.3 mm and a wall thickness of 0.85 mm, and the spacing between the adjacent capillary heat-conducting water pipes is 10 mm.

5. The installation and construction method of the thin-shell heat exchanger according to any one of claims 1-4, comprising the following steps:
(1) determining a laying position of the capillary mesh, checking whether the wall surface of the tunnel is flat, and forming a trench at the corresponding position;
(2) performing a leak test on the capillary mesh; and
(3) after the test succeeds, constructing the first tunnel lining, the thin-shell heat exchanger and the second tunnel lining.

6. The installation and construction method according to claim 5, wherein the laying position of the capillary mesh is corrected with a level gauge, a theodolite or a balance level; and if the wall surface of the tunnel is uneven, the base surface is leveled with cement mortar.

7. The installation and construction method according to claim 5, wherein a hydrostatic test method is applied in the form of sampling to the leak test on the capillary mesh.

8. The installation and construction method according to claim 5, wherein the construction method of the first tunnel lining, the thin-shell heat exchanger and the second tunnel lining comprises:
(1) constructing the first tunnel lining;
(2) laying and installing the thin-shell heat exchanger;
(3) sequentially arranging a mortar layer, a geo-textile and a waterproof board outside the thin-shell heat exchanger; and
(4) constructing the second tunnel lining.

9. The installation and construction method according to claim 8, wherein the laying and installation method of the thin-shell heat exchanger comprises:
installing and connecting the water inlet main pipe, the water return main pipe, and the capillary mesh successively;
performing a hydrostatic test on the capillary mesh section by section, and then plastering the capillary mesh and a header; and
marking the mortar layer, performing a hydrostatic test and flushing.

10. The installation and construction method according to claim 5, further comprising: before the laying and installation of the thin-shell heat exchanger, arranging the reserved main pipe trench and the thin-shell heat exchanger main pipe on one side of the tunnel.

11. A subway waste heat source heat pump system, comprising the thin-shell heat exchanger according to any one of claims 1-4, a waste heat source heat pump system, a terminal heat exchanger and an auxiliary cold source, wherein the waste heat source heat pump system comprises a compressor, a condenser, a throttling valve and an evaporator connected in series, the thin-shell heat exchanger delivers high temperature liquid to the evaporator through a circulation loop between a winter subway waste heat source side heat exchanger and a heat pump unit, the evaporator delivers the high temperature liquid to the condenser through the compressor, low temperature return water from the terminal heat exchanger is delivered to the condenser through a circulation loop between a winter load side terminal heat exchanger and the heat pump unit and heated to be high temperature water after heat exchange in the condenser, and the high temperature water flows into the terminal heat exchanger to supply heat to ground buildings; cooling water in the condenser exchanges heat with high temperature and high pressure refrigerant gas, then is delivered to the auxiliary cold source through a circulation loop between a summer auxiliary cold source side and the heat pump unit for cooling and returned to the condenser, the cooling water in the condenser is delivered to the evaporator through the throttling valve, low temperature and low pressure refrigerant liquid in the evaporator exchanges heat with chilled water, and the chilled water cooled is delivered to the terminal heat exchanger through a circulation loop between a summer load side terminal heat exchanger and the heat pump unit to supply cold to the ground buildings.

12. The subway waste heat source heat pump system with an auxiliary cold source according to claim 11, wherein an outlet of the compressor is connected to a first connector of the condenser, a third connector of the condenser is connected to the throttling valve, the other end of the throttling valve is connected to a fourth connector of the evaporator, and a second connector of the evaporator is connected to an inlet of the compressor, thus constituting a circulation loop of the waste heat source heat pump unit.

13. The subway waste heat source heat pump system with an auxiliary cold source according to claim 11, wherein the circulation loop between the winter subway waste heat source side heat exchanger and the heat pump unit comprises a fifth valve, a first tee joint, a second tee joint, a first circulating water pump, an eighth valve, a third tee joint, and a fourth tee joint, wherein a first connector of the evaporator is connected to a first pipe orifice of the thin-shell heat exchanger via the fifth valve, the first tee joint, the second tee joint and the first circulating water pump, and a third connector of the evaporator is connected to a second pipe orifice of the thin-shell heat exchanger via the eighth valve, the third tee joint and the fourth tee joint.

14. The subway waste heat source heat pump system with an auxiliary cold source according to claim 11, wherein the circulation loop between the winter load side terminal heat exchanger and the heat pump unit comprises a sixth tee joint, a ninth tee joint, a fourth valve, a seventh tee joint, an eighth tee joint, a tenth tee joint, a seventh valve and a second circulating water pump, wherein a second connector of the condenser is connected to a water inlet end of the terminal heat exchanger via the sixth tee joint, the ninth tee joint and the fourth valve, and a fourth connector of the condenser is connected to a water return end of the terminal heat exchanger via the seventh tee joint, the eighth tee joint, the tenth tee joint, the seventh valve and the second circulating water pump.

15. The subway waste heat source heat pump system with an auxiliary cold source according to claim 11, wherein the circulation loop between the summer auxiliary cold source side and the heat pump unit comprises the sixth tee joint, a fifth tee joint, a second valve, a fourth circulating water pump, the seventh tee joint, the eighth tee joint and a sixth valve, wherein the second connector of the condenser is connected to a water inlet end of the auxiliary cold source via the sixth tee joint, the fifth tee joint, the second valve and the fourth circulating water pump, and the fourth connector of the condenser is connected to a water return end of the auxiliary cold source via the seventh tee joint, the eighth tee joint and the sixth valve.

16. The subway waste heat source heat pump system with an auxiliary cold source according to claim 11, wherein the circulation loop between the summer load side terminal heat exchanger and the heat pump unit comprises a third valve, the second tee joint, the ninth tee joint, a ninth valve, the fourth tee joint, the tenth tee joint and a third circulating water pump, wherein the first connector of the evaporator is connected to the water return end of the terminal heat exchanger via the third valve, the second tee joint and the ninth tee joint, and the third connector of the evaporator is connected to the water inlet end of the terminal heat exchanger via the ninth valve, the fourth tee joint, the tenth tee joint and the third circulating water pump.

17. The subway waste heat source heat pump system with an auxiliary cold source according to claim 11, further comprising a circulation loop between a summer subway tunnel and rock cold source side and the heat pump unit, wherein circulating liquid in the thin-shell heat exchanger is delivered to the condenser through the circulation loop between the summer subway tunnel and rock cold source side and the heat pump unit, and exchanges heat with the high temperature and high pressure refrigerant gas in the condenser, the temperature of the circulating liquid rises, then the circulating liquid flows out from the condenser and is returned to the thin-shell heat exchanger to emit heat to the rock surrounding the subway tunnel for storage or directly emit heat to the tunnel and the heat is taken away by piston wind.

18. The subway waste heat source heat pump system with an auxiliary cold source according to claim 11, wherein the circulation loop between the summer subway tunnel and rock cold source side and the heat pump unit comprises the sixth tee joint, the fifth tee joint, the third tee joint, a first valve, the seventh tee joint, the first tee joint, the tenth valve and the first circulating water pump, wherein the second connector of the condenser is connected to the second pipe orifice of the thin-shell heat exchanger via the sixth tee joint, the fifth tee joint, the third tee joint and the first valve, and the fourth connector of the condenser is connected to the first pipe orifice of the thin-shell heat exchanger via the seventh tee joint, the first tee joint, the tenth valve and the first circulating water pump.

19. An operating method of the subway waste heat source heat pump system with an auxiliary cold source according to any one of claims 11 to 18, comprising the following steps that:
high temperature and high pressure refrigerant gas discharged from the compressor enters the condenser and then is condensed into low temperature and high pressure liquid, the low temperature and high pressure refrigerant liquid becomes low temperature and low pressure refrigerant liquid through the throttling valve, the low temperature and low pressure refrigerant liquid flows into the evaporator to become low temperature and low pressure refrigerant gas after the evaporator absorbs heat, and the refrigerant gas flows back to the compressor;
when heat is supplied in winter, the fourth, fifth, seventh and eighth valves are opened, the first, second, third, sixth, ninth and tenth valves are closed, the first and second circulating water pumps are started, and the third and fourth circulating water pumps are shut off; high temperature liquid in the thin-shell heat exchanger is pumped into the evaporator by the first circulating water pump via the first pipe orifice, and exchanges heat with the low temperature and low pressure refrigerant liquid in the evaporator, and then the low temperature liquid flows back from the third connector of the evaporator to the thin-shell heat exchanger to recover waste heat; at the same time, low temperature liquid at the terminal heat exchanger is pumped into the condenser by the second circulating water pump, and exchanges heat with the high temperature and high pressure refrigerant gas in the condenser to become high temperature water, the high temperature water flows out from the second connector of the condenser and then enters the terminal heat exchanger to supply heat to the ground building, and the low temperature water is pumped into the condenser by the second circulating water pump, which process is circulated in sequence to achieve heat supply;
when cold is supplied in summer, the fourth, fifth, seventh and eighth valves are closed, the third and ninth valves are opened, the second circulating water pump is started, and the third circulating water pump is shut off; the cooling tower is used as a cold source, the second and sixth valves are opened and the fourth circulating water pump is started, and the first and tenth valves are closed and the first circulating water pump is shut off; cooling water in the condenser exchanges heat with the high temperature and high pressure refrigerant gas, the temperature of the cooling water rises, then the cooling water is pumped into the cooling tower by the fourth circulating water pump via the second connector of the condenser for cooling, the cooled water is returned to the condenser, the cooling water in the condenser is delivered to the evaporator via the throttling valve, the low temperature and low pressure refrigerant liquid in the evaporator exchanges heat with returned chilled water, the chilled water is cooled and then pumped into the terminal heat exchanger from the third connector of the evaporator by the third circulating water pump to supply cold to users in ground buildings, then the temperature of the chilled water rises, and the chilled water flows back to the evaporator, which process is circulated in sequence to achieve cold supply.

20. The method according to claim 19, further comprising:
when cold is supplied in summer, the fourth, fifth, seventh and eighth valves are closed, the third and ninth valves are opened, the second circulating water pump is shut off, and the third circulating water pump is started; the subway tunnel and surrounding rock thereof are used as a cold source, the first and tenth valves are opened and the first circulating water pump is started, and the second and sixth valves are closed and the fourth circulating water pump is shut off; circulating liquid in the thin-shell heat exchanger is pumped into the condenser by the first circulating water pump, and exchanges heat with the high temperature and high pressure refrigerant gas in the condenser, the temperature of the circulating liquid rises, then the circulating liquid flows out from the second connector of the condenser and is returned to the thin-shell heat exchanger to emit heat to the rock surrounding the subway tunnel for storage or directly emit heat to the tunnel and the heat is taken away by piston wind; the cooling water in the condenser is cooled and then delivered to the evaporator via the throttling valve, the low temperature and low pressure refrigerant liquid in the evaporator exchanges heat with returned chilled water, the chilled water is cooled and then pumped into the terminal heat exchanger from the third connector of the evaporator by the third circulating water pump to supply cold to users in ground buildings, then the temperature of the chilled water rises, and the chilled water flows back to the evaporator, which process is circulated in sequence to achieve cold supply.
